# EUROPEAN PATENT APPLICATION

(11) **EP 1 672 819 A1**
(43) Date of publication of application: **21.06.2006**
(21) Application number: 04788285.7
(22) Date of filing: 29.09.2004
(51) Int. Cl.: H04B 7/26

(54) **SEARCH SUPPORTING APPARATUS AND SEARCH SUPPORTING METHOD**

(30) Priority: 07.10.2003 JP 2003348040
(71) Applicant: MATSUSHITA ELECTRIC INDUSTRIAL CO., LTD., Kadoma-shi, Osaka 571-8501 (JP)
(72) Inventor: YAMANAKA, Ryutaro, Osaka 560-0021 (JP); NIHEI, Takao, Kanagawa 247-0009 (JP)
(74) Representative: Grünecker, Kinkeldey, Stockmair & Schwanhäusser Anwaltssozietät
(86) International application number: PCT/JP2004/014218
(87) International publication number: WO 2005/036780

(57) **Abstract**

A search support apparatus that makes it easy to search for an object and communicate with a communication apparatus which manages the object. In this apparatus, when control section 105 receives object information from demodulation section 102a, it reads object information (search conditions) registered in object information section 103b in condition registration section 103, compares the information with the input object information, generates a control signal for controlling a reporting operation of operation section 106 according to the comparison result and outputs the control signal to operation section 106. Operation section 106 executes a reporting operation according to the comparison result of the object information at control section 105, and is constructed of rotation control section 106a and vibration motor 106b as shown in FIG. 4. Rotation control section 106a controls the intensity or the period of vibration of vibration motor 106b according to the control signal input from control section 105.

## Description

### Technical Field

The present invention relates to a search support apparatus and a search support method for supporting a search for an object.

### Background Art

Conventionally, with the rapid spread of cellular phones provided with an e-mail function, the number of users communicating using e-mail is drastically increasing since e-mail does not limit the time and location of other party compared to a conversation.

However, using an e-mail with a cellular phone involves a connection with a communication network through an ISP, requiring a payment of a fee to the ISP and also requiring an enrollment fee for the ISP, which results in a problem of a cost increase.

In order to solve this cost problem, for example, Patent Document 1 proposes to construct a radio communication apparatus provided with a radio transmission/reception section that displays "equipment specific information" extracted from a host CPU on a display section, selects/operates the other party radio communication apparatus from the displayed "equipment specific information" through an operation section, establishes a communication link with the other party radio communication apparatus and transmits/receives data by radio in accordance with a predetermined radio communication standard (e.g., Bluetooth) and to reduce information exchange costs by setting master and slave roles among a plurality of radio communication apparatuses having this configuration and enabling transmission and reception.

### Patent Document 1: Unexamined Japanese Patent Publication No.2003-244012

### Disclosure of Invention

### Problems to be Solved by the Invention

However, the radio communication terminal apparatus of above described Patent Document 1 displays/selects "equipment specific information", sets the master/slave roles in accordance with a predetermined radio communication standard (e.g. Bluetooth) among radio communication apparatuses having the same configuration and transmits/receives information, but there has been a problem that the same "desired connection code" must be set as a precondition of interconnection and information cannot be exchanged and conditions of use are limited unless desired connection codes match.

That is, the radio communication terminal apparatus of Patent Document 1 can exchange information aboutly among the same communication apparatuses and under the condition that the set "desired connection codes" are also the same, which constitutes a high hurdle in using the apparatus as a communication tool and is not necessarily user friendly.

It is an object of the present invention to provide a search support apparatus and a search support method that receive information about an object under the control from a communication apparatus existing in a communication area, compare the information with search conditions of registered objects, execute a reporting operation according to the comparison result and thereby facilitate a search for the object and communications with the communication apparatus that manages the object.

### Means for Solving the Problem

The search support apparatus according to the present invention adopts a configuration including a search condition registration section that registers , object search conditions, a communication section that detects a communication apparatus which exists in a communication area and receives information about the obj ect under the control from the communication apparatus, a control section that compares the information about the object received from the communication section with the search conditions registered in the search condition registration section and outputs a control signal for controlling a reporting operation according to the comparison result and a reporting section that executes a reporting operation using the control signal output from the control section.

### Advantageous Effect of the Invention

Accordingto the present invention, it ispossible to facilitate a search for an object and facilitate communications with a communication apparatus that manages the object.

### Brief Description of Drawings

FIG.1 is a block diagram showing the configuration of main components of a search support apparatus according to Embodiment 1 of the present invention;
FIG.2 is a block diagram showing the internal configuration of a radio communication section of the search support apparatus according to Embodiment 1;
FIG.3 is a block diagram showing the internal configuration of a condition registration section of the search support apparatus according to Embodiment 1;
FIG.4 is a block diagram showing the internal configuration of an operation section of the search support apparatus according to Embodiment 1;
FIG.5 is a block diagram showing the internal configuration of the operation section using sound of the search support apparatus according to Embodiment 1;
FIG.6 is a block diagram showing the internal configuration of the operation section using light of the search support apparatus according to Embodiment 1;
FIG.7 is a block diagram showing the internal configuration of the operation section using an image of the search support apparatus according to Embodiment 1;
FIG.8 is a block diagram showing the internal configuration of the operation section using a smell of the search support apparatus according to Embodiment 1;
FIG.9 illustrates a display example of a selection function of selecting the start of a search of the search support apparatus according to Embodiment 1;
FIG.10 illustrates a display example of the result of a search for a desired person of the search support apparatus according to Embodiment 1;
FIG. 11 illustrates a display example of a selectable image-taking mode of the search support apparatus according to Embodiment 1;
FIG.12 is a block diagram showing the system configuration and the configuration of main components of a search support apparatus according to Embodiment 2 of the present invention; and
FIG.13 illustrates a display example of a hot spot guide map of the search support apparatus according to Embodiment 2.

### Best Mode for Carrying Out the Invention

Now, embodiments of the present invention will be described in detail with reference to the accompanying drawings.

(Embodiment 1)

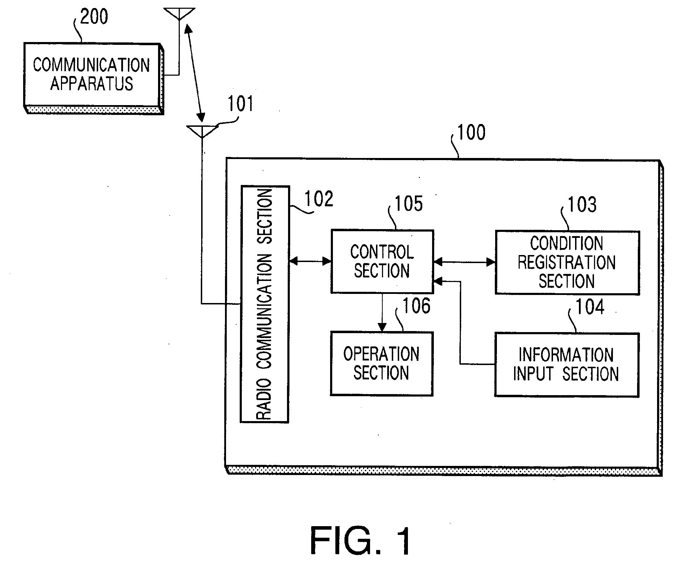

FIG.1 is a block diagram showing the configuration of main components of a search support apparatus according to Embodiment 1 of the present invention. Search support apparatus 100 is mainly constructed of antenna 101, radio communication section 102, condition registration section 103, information input section 104, control section 105 and operation section 106. Suppose communication apparatus 200 is an apparatus that can communicate with search support apparatus 100 by radio and manages information about an object.

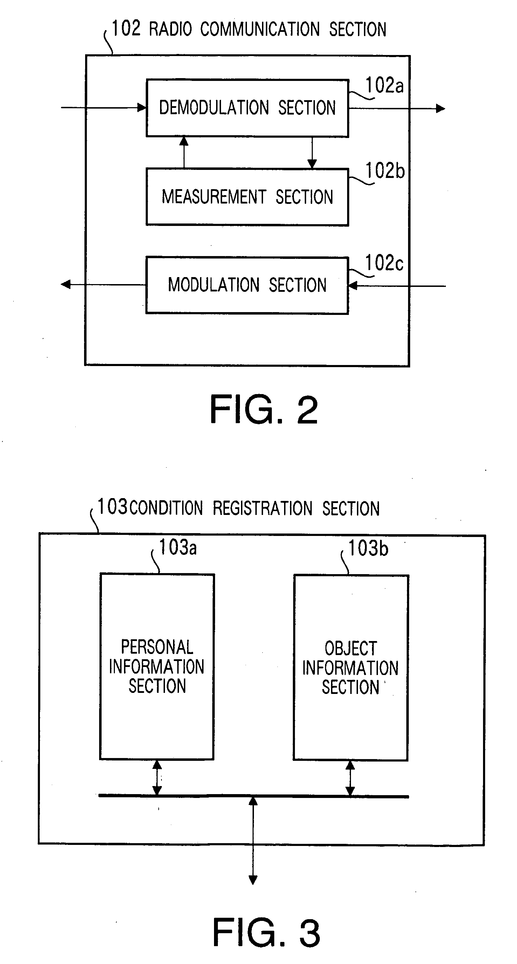

Radio communication section 102 includes a radio communication function corresponding to a predetermined radio communication standard such as wireless LAN, Bluetooth (R), UWB (Ultra Wide Band) and is constructed of demodulation section 102a, measurement section 102b and modulation section 102c as shown in FIG.2. Radio communication section 102 transmits a signal for detecting communication apparatus 200 which exists in a communication area under the control of control section 105 from modulation section 102c through antenna 101, and when it detects communication apparatus 200, radio communication section 102 executes a radio communication protocol with communication apparatus 200, establishes a radio communication channel, then receives information about the object at demodulation section 102a through antenna 101 from communication apparatus 200 and outputs the information to control section 105. Furthermore, measurement section 102b measures the reception level of a signal received by demodulation section 102a, returns the measurement result to demodulation section 102a and outputs it to control section 105. Control section 105 measures a distance from communication apparatus 200 based on the measurement result of the reception level input from demodulation section 102a.

Condition registration section 103 is a memory in which a user of search support apparatus 100 registers the user's personal information and object information to be searched and is constructed of personal information section 103a and object information section 103b as shown in FIG.3. Condition registration section 103 registers personal information (e.g., phone number, mail address, code, tag information, sex, age) input from information input section 104 by the user and obj ect information (e.g., phone number, mail address, code, tag information, sex, age) in corresponding personal information section 103a and object information section 103b respectively through control section 105. The registration contents of personal information section 103a and object information section 103b can be changed arbitrarily by the user.

Information input section 104 is provided with a keyboard (numeric keypad, character or the like) to input the personal information and object information to be registered in condition registration section 103 and outputs the input information input from the keyboard by the user to control section 105.

Control section 105 is constructed of a CPU (Central Processing Unit) or the like to control radio communication section 102, condition registration section 103 and operation section 106, and controls a radio communication operation of radio communication section 102, information registration processing of condition registration section 103 and reporting operation of operation section 106. Furthermore, when object information is input from demodulation section 102a, control section 105 reads the object information (search conditions) registered in object information section 103b in condition registration section 103, compares the object information with the input object information, generates a control signal for controlling the reporting operation of operation section 106 according to the comparison result and outputs the control signal to operation section 106.

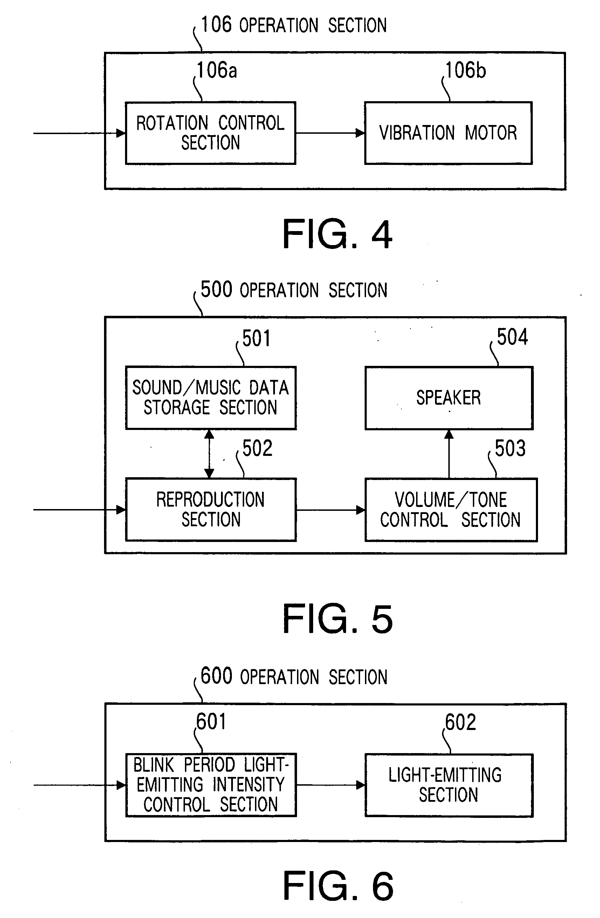

Operation section 106 executes a reporting operation according to the comparison result of the object information at control section 105 and is constructed of rotation control section 106a and vibration motor 106b as shown in FIG. 4 . Rotation control section 106a controls the intensity or period of vibration of vibration motor 106b according to the control signal input from control section 105.

Next, the operation of search support apparatus 100 will be explained with reference to FIG.1 to FIG.4. Search support apparatus 100 according to this embodiment registers information about an object for which the user tries to search beforehand and when the user approaches communication apparatus 200 that manages the corresponding object, operation section 106 vibrates and reports the user that the user is in the neighborhood of the object.

When, for example, the user waits for a person or searches for a product the user saw in a flier, the user registers the phone number, mail address, code, tag information or the like recorded as the above described object information as the information about the person or product, and it is thereby possible to search for the person and product with the help of vibration.

When searching for a person, suppose the other party also carries communication apparatus 200 which can communicate with search support apparatus 100 by radio, and when searching for a product, suppose, for example, that communication apparatus 200 that manages product information is installed in the vicinity of a showcase of products in a store.

When the user who carries search support apparatus 100 is moving, if radio communication section 102 detects communication apparatus 200 which exists in the communication area and control section 105 recognizes the detection of communication apparatus 200, radio communication section 102 establishes a radio communication channel with communication apparatus 200 by executing a radio communication protocol, then demodulation section 102a receives information about the object from communication apparatus 200 through antenna 101 and acquires demodulated object information.

Control section 105 compares the object information acquired from demodulation section 102a with the object information (search conditions) read from object information section 103b in condition registration section 103, and when the two match, generates a control signal for controlling a reporting operation of operation section 106 and outputs the control signal to operation section 106. Rotation control section 106a controls the intensity or the period of vibration of vibration motor 106b according to the control signal input from control section 105 and operation section 106 thereby reports the user that the user is approaching the object.

In this case, control section 105 periodically measures the distance from communication apparatus 200 according to a reception level signal input from measurement section 102b in radio communication section 102, generates a near/far signal for intensifying vibration or shortening the period of vibration of operation section 106 as the distance from communication apparatus 200 decreases and outputs the near/far signal to operation section 106. Therefore, operation section 106 is capable of reporting the user that the user is approaching the object based on the intensity or period of vibration.

Furthermore, when the distance from communication apparatus 200 increases, control section 105 generates a near/far signal for reducing vibration or increasing the period of vibration of operation section 106 and outputs the near/far signal to operation section 106. Therefore, operation section 106 is capable of reporting the user that the user is moving away from the object based on the intensity or period of vibration.

As described above, search support apparatus 100 automatically searches for communication apparatus 200 which manages the corresponding object based on object information registered beforehand by the user and reports it by means of vibration, and therefore the search support apparatus 100 makes it possible to guide the user to a person the user is waiting for or the location of a product the user is looking for and facilitate the user to search for a person or product.

The case where operation section 106 shown in FIG.4 performs reporting by means of vibration has been shown, but the reporting mode is not limited to vibration, and the reporting operation can also be performed by means of sound, light, image, smell or the like. The configuration of the operation section corresponding to these other reporting modes will be explained with reference to FIG.5 to FIG.8.

Operation section 500 shown in FIG.5 is a configuration example when a reporting operation is performed by means of sound and is constructed of sound/music data storage section 501, reproduction section 502, volume/tone control section 503 and speaker 504. In this case, suppose that sound/music data storage section 501 stores PCM (Pulse Code Modulation) data, MP3 (MPEG Audio Layer-3) data, AAC (Advanced Audio Coding) data or the like as sound/music data. Sound/music data storage section 501 may also be adapted so as to store sound and music of the user's preferences.

Reproduction section 502 reads and decodes sound/music data stored in sound/music data storage section 501 according to a control signal (near/far signal) input from control section 105 and outputs a reproduction sound signal and a volume/tone control signal to volume control section 503. Volume control section 503 gradually changes the volume of the music/sound output to speaker 504 according to the reproduction sound signal and volume/tone control signal input from reproduction section 502 or gradually changes tempo/rhythm.

Operation section 600 shown in FIG.6 is a configuration example when a reporting operation is performed by means of light and is constructed of blink period/light-emitting intensity control section 601 and light-emitting section 602. Blink period/light-emitting intensity control section 601 generates a blink period control signal or a light-emitting intensity control signal according to a control signal (near/far signal) input from control section 105 and outputs the signal to light-emitting section 602 and gradually changes the blink period of light-emitting section 602 or light-emitting intensity.

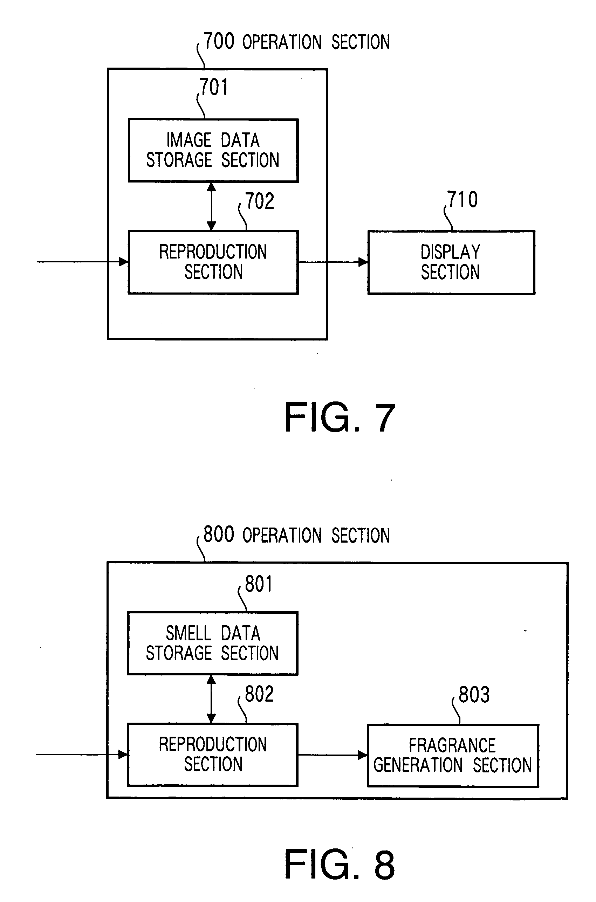

Operation section 700 shown in FIG.7 is a configuration example when a reporting operation is performed by means of image display and is constructed of image data storage section 701 and reproduction section 702 and display section 710 is connected outside. In this case, suppose that image data storage section 701 stores an image, animation or the like (e.g., still image such as bitmap, JPEG (Joint Photographic Experts Group) and motion image such as MPEG (Moving Picture Experts Group)). Furthermore, image data storage section 701 may also be adapted so as to store an image or animation of the user's preferences. Display section 710 is constructed of a liquid crystal panel, EL (electroluminescence) panel or the like.

Reproduction section 702 reads image data or animation data stored in image data storage section 701 according to a control signal (near/far signal) input from control section 105, decodes the data and outputs the decoded data to display section 710. Display section 710 displays an image according to a reproduced image signal input from reproduction section 702.

Operation section 800 shown in FIG.8 is a configuration example when a reporting operation is performed by means of smell and is constructed of smell data storage section 801, reproduction section 802 and fragrance generation section 803. In this case, smell data storage section 801 stores, for example, smell data which is a digitized (numerically converted) smell and can also be adapted so as to store smell data of the user' s preferences.

Reproduction section 802 reads the smell data stored in smell data storage section 801 according to a control signal (near/far signal) input from control section 105, decodes the data and outputs a fragrance reproduction signal and a generation amount control signal to fragrance generation section 803. Fragrance generation section 803 generates fragrance according to the fragrance reproduction signal and the generation amount control signal input from reproduction section 802 and gradually changes the amount of generation.

As described above, various configurations can be used for the operation section according to its reporting mode, and it is possible to select the configuration as appropriate in accordance with the location where search support apparatus 100 is used or the user's preferences and expand the mode of use of search support apparatus 100.

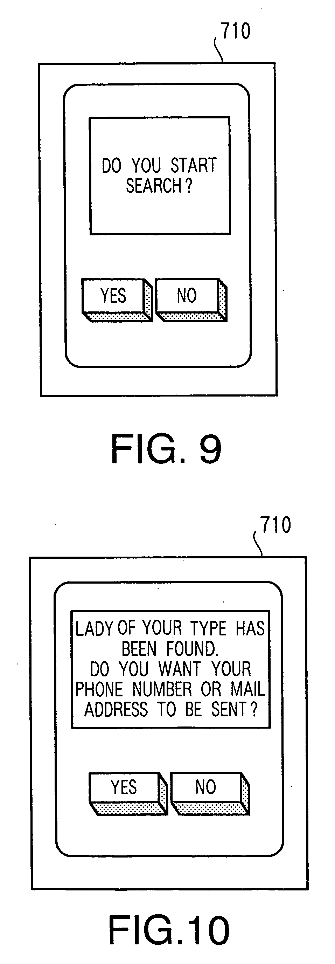

The above described embodiment has explained the case where search support apparatus 100 is always operating to detect communication apparatus 200, but considering the battery life of search support apparatus 100, the user is preferably allowed to specify the start of this function arbitrarily. For this purpose, as shown in FIG.9, a displays for the user to select the start of a search mode is provided on a screen of display section 710 of operation section 700 shown in FIG.7 and a series of search operations are performed when" YES" button is pushed, it is thus possible to extend the battery of life pf search support apparatus 100.

Furthermore, when a communication is performed between search support apparatuses 100, by exchanging mutually registered personal information and comparison results, it is also possible to develop a service of searching for a desired person (opposite sex), for example. Hereinafter, an operation about this service will be explained.

When search support apparatus 100 detects that another search support apparatus 100 exists in the communication area, it transmits the personal information registered in condition registration section 103 to other search support apparatus 100, receives personal information from other search support apparatus 100, reads object information (information about the desired person) registered in condition registration section 103 and compares it with the received personal information.

Next, search support apparatus 100 transmits a match/mismatch signal to other search support apparatus 100 as the comparison result, receives a match/mismatch signal from other search support apparatus 100, operates operation section 106 only when the two match and reports that a desired person (opposite sex) is in the neighborhood.

Next, as shown in FIG. 10, search support apparatus 100 displays "a lady of your type has been found out. Do you want your phone number or mail address to be sent to her?" or "do you want to start a chat?" or the like on display section 710 and when the user pushes the "YES" button, the screen may be switched to a screen of desired operation, that is, an e-mail creating screen or a chat screen and sent to the other party.

As described above, by registering information about the desired person (opposite sex) as the object, it is possible to effectively use search support apparatus 100 as a communication tool.

Moreover, as the personal information to be sent to the other party, registered image data may be sent or a camera (CCD sensor, CMOS sensor or the like) may be mounted on search support apparatus 100, this camera may be started and images taken at that place and time may be sent. In this case, actual surrounding buildings, clothes and hairstyle or the like may also be sent, which makes it easier for the other communication party to identify the location.

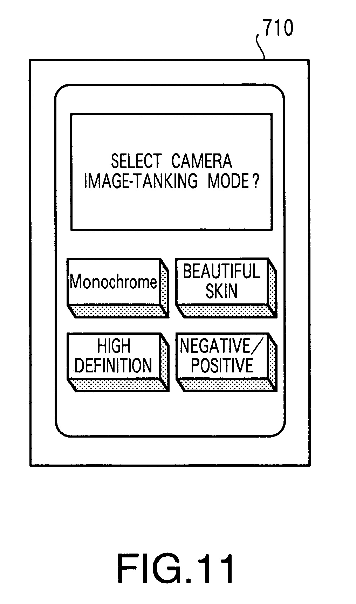

Furthermore, when an image is taken by a camera, it is possible to make a plurality of image-taking modes selectable and provide, for example, "black and white, high definition, negative/positive, beautiful skin" modes as shown in FIG.11 and when the "beautiful skin" mode is selected, masking processing may be applied to parts to be preferably hidden to the other party such as freckle, ephelis and wrinkle or the like and an image of "lowered quality" such as a blurred image or image with reduced resolution may be sent. Furthermore, it is also possible to send an image taken just for fun by selecting another image-taking mode. Likewise, it is also possible to provide a "3D" mode button, incorporate two cameras so as to record/reproduce a 3D image or record/display a 3D image with light intensity and phase information recorded using a holography technology and stage direction so as to make the user feel satisfaction that the leading-edge technology is installed.

(Embodiment 2)
This embodiment will explain a case where a service of guiding a hot spot area such as a wireless LAN is provided using a search support apparatus.

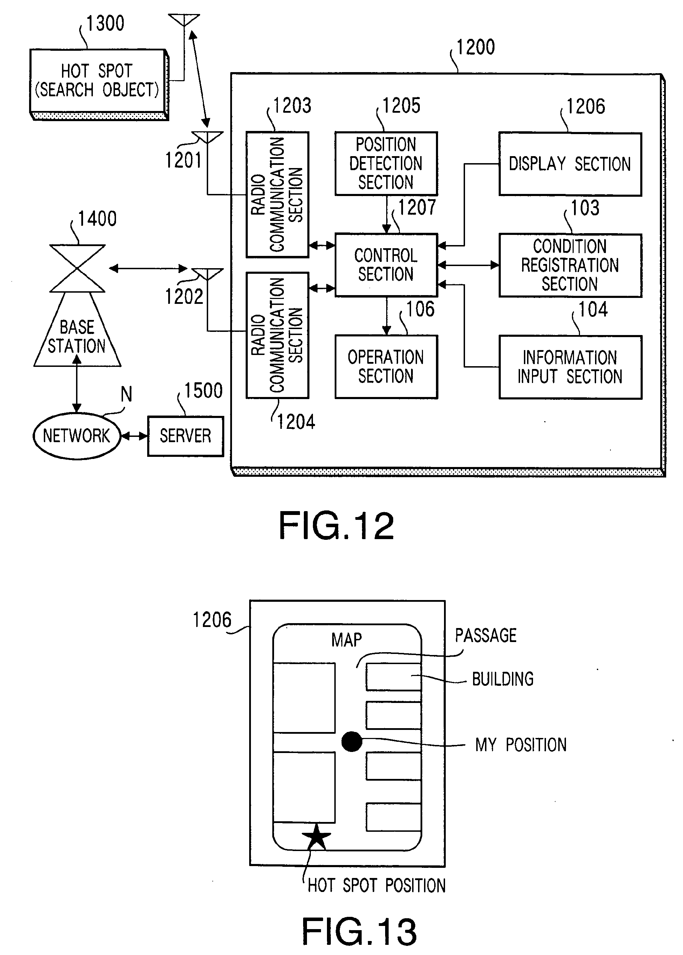

FIG.12 shows the system configuration and configuration of main components of search support apparatus 1200 according to this embodiment. Search support apparatus 1200 is provided with two radio communication functions of a wireless LAN function and a cellular phone function, and is capable of communicating by switching between hot spot 1300 with the wireless LAN function and base station 1400 with the cellular phone function as appropriate.

Search support apparatus 1200 is mainly constructed of antennas 1201, 1202, radio communication sections 1203, 1204, position detection section 1205, display section 1206, control section 1207, condition registration section 103, information input section 104 and operation section 106. In search support apparatus 1200, the same components as those of search support apparatus 100 in FIG.1 are assigned the same reference numerals.

Antenna 1201 and radio communication section 1203 become operative within a communication area of hot spot 1300 which corresponds to the wireless LAN function, while antenna 1202 and radio communication section 1204 become operative within a communication area of base station 1400 which corresponds to the cellular phone function.

Position detection section 1205 includes a GPS (Global Positioning System) function, detects the current position of search support apparatus 1200 and outputs the detected current position information to control section 1207. Display section 1206 is constructed of a liquid crystal panel, EL panel or the like and displays hot spot guide information input from control section 1207.

Control section 1207 outputs the current position information input from position detection section 1205 to radio communication section 1204, transmits it to base station 1400, generates hot spot guide information based on map information received from base station 1400 at radio communication section 1204, outputs it to display section 1206 and displays a hot spot guide map.

When base station 1400 receives the current position information from search support apparatus 1200, it acquires the position information about the hot spot stored in server 1500 through network N, identifies the hot spot position nearest the current position of search support apparatus 1200 and transmits the position information to search support apparatus 1200.

Control section 1207 of search support apparatus 1200 displays a hot spot guide map as shown in FIG.13 on display section 1206 based on the position information about the hot spot received from base station 1400. Control section 1207 registers the position information about the received hot spot in condition registration section 103, compares the position information periodically input from position detection section 1205 with the registered position information about the hot spot, and when the hot spot comes closer to a preset distance, control section 1207 causes operation section 106 to vibrate reporting the user that hot spot 1300 is approaching.

As described above, search support apparatus 1200 of this embodiment uses the current position display service function of the cellular phone function and the search function based on the information about an object of the present invention and makes it possible to search for the position of a hot spot in a narrow communication area. And it is thereby possible to easily search for a hot spot that is difficult to search from outside the area and effectively use the hot spot.

This embodiment has explained the case where the search target is a hot spot, but a similar service can also be provided even when communication areas of other radio communication schemes are used as search targets.

A first mode of the search support apparatus of the present invention adopts a configuration comprising a search condition registration section that registers object search conditions, a communication section that detects a communication apparatus which exists in a communication area and receives information about the object under the control of the communication apparatus, a control section that compares the information about the object received from the communication section with the search conditions registered in the search condition registration section and outputs a control signal for controlling a reporting operation according to the comparison result and a reporting section that performs a reporting operation according to the control signal output from the control section.

This configuration makes it possible to easily search for an object and communicate with a communication apparatus that manages the object.

A second mode of the search support apparatus of the present invention adopts a configuration comprising a search condition registration section that registers object search conditions, a communication section that detects a communication apparatus which exists in a communication area, receives information about the object under the control of the communication apparatus and transmits the search conditions registered in the search condition registration section to the communication apparatus, a control section that compares the information about the object received from the communication section with the search conditions registered in the search condition registration section, transmits the comparison result to the communication apparatus through the communication section, receives the comparison result from the communication apparatus through the communication section and outputs a control signal for controlling a reporting operation according to both the transmitted and received comparison results and a reporting section that executes a reporting operation through the control signal output from the control section.

This configuration makes it possible to easily search for an object, communicate with a communication apparatus that manages the object and realize a more intimate communication with the other party considering also search conditions of the other communication party.

A third mode of the search support apparatus of the present invention adopts the configuration of the search support apparatus according to the first mode, wherein the control section measures a distance from the communication apparatus based on the reception intensity of the received signal by the communication section, generates and outputs the control signal according to the measured distance, and the reporting section changes the contents of the reporting operation according to the control signal output from the control section.

According to this configuration, it is possible to easily know perspective of an object and make a search for an object much easier.

A fourth mode of the search support apparatus of the present invention adopts the configuration of the search support apparatus according to the first mode, wherein the reporting section comprises a vibration control section and a vibration section and the vibration control section changes the intensity or the period of vibration of the vibration section according to the control signal output from the control section.

This configuration makes it possible to know the position of an obj ect to be searched by means of vibration.

A fifth mode of the search support apparatus of the present invention adopts the configuration of the search support apparatus according to the first mode, wherein the reporting section comprises a sound information storage section, a sound reproduction section, a volume control section and a sound generation section, and the sound reproduction section selects sound information stored in the sound information storage section according to the control signal output from the control section, outputs a reproduction sound signal and volume control signal to the volume control section and controls the amount of the reproduced sound generated.

This configuration makes it possible to know the position of an object to be searched by means of sound.

A sixth mode of the search support apparatus of the present invention adopts the configuration of the search support apparatus according to the first mode, wherein the reporting section comprises a blink period light-emitting intensity control section and a light-emitting section, and the blink period light-emitting intensity control section changes the blink period or the light-emitting intensity of the light-emitting section according to the control signal output from the control section.

This configuration makes it possible to know the position of an object to be searched by means of light.

A seventh mode of the search support apparatus of the present invention adopts the configuration of the search support apparatus according to the first mode, wherein the reporting section comprises an image information storage section, an image reproduction section and a display section, and the image reproduction section selects image information stored in the image storage section according to the control signal output from the control section, outputs an image reproduction signal to the display section and displays a reproduced image.

This configuration makes it possible to know the position of an object to be searched by means of an image.

An eighth mode of the search support apparatus of the present invention adopts the configuration of the search support apparatus according to the first mode, wherein the reporting section comprises a smell information storage section, a smell reproduction section and a fragrance generation section, and the smell reproduction section selects smell information stored in the smell information storage section according to the control signal output from the control section, outputs a smell reproduction signal to the fragrance generation section, generates fragrance in the fragrance generation section and changes the amount of fragrance generated.

This configuration makes it possible to know the position of an object to be searched by means of smell.

A ninth mode of the search support apparatus of the present invention adopts the configuration of the search support apparatus according to the second mode, wherein the search condition registration section registers personal information about the user who uses the apparatus and object information such as characteristics and preferences of the person as search conditions of the object, and the control section comprises a confirmation section that confirms permission to transmit the personal information registered in the search condition registration section to the communication apparatus when both the transmitted and received comparison results match and transmits the personal information to the communication apparatus through the communication section when the transmission is permitted.

According to this configuration, it is possible to easily search for a desired person and communicate with the person.

A tenth mode of the search support apparatus of the present invention adopts the configuration of the search support apparatus according to the ninth mode, further comprising an image-pickup section that performs image pickup in a plurality of image-pickup modes, wherein the control section comprises an image-pickup mode selection section that allows the user to select a desired image-pickup mode, sets the image-pickup mode of the image-pickup section in the selected image-pickup mode and registers the user's image captured in the search condition registration section as the personal information.

According to this configuration, it is possible to capture an image to be transmitted in a desired image-pickup mode and communicate smoothly with the other communication party.

A first mode of the search support method of the present invention comprises a search condition registration step of registering object search conditions, a communication step of detecting a communication apparatus which exists in a communication area and receiving information about the object under the control of the communication apparatus, a control step of comparing the received information about the object with the registered search conditions and controlling a reporting operation according to the comparison result and a reporting step of executing a reporting operation according to the output control signal.

According to this method, it is possible to easily search for an object and communicate with the communication apparatus which manages the object.

A second mode of the search support method of the present invention comprises a search condition registration step of registering object search conditions, a communication step of detecting a communication apparatus which exists in a communication area, receiving information about the object under the control of the communication apparatus and transmitting the search conditions registered in the search condition registration section to the concerned communication apparatus, a control step of comparing the received information about the object with the registered search conditions, transmitting the comparison result to the communicationapparatus, receiving the comparison result from the communication apparatus and outputting a control signal for controlling a reporting operation according to both the transmitted and received comparison results and a reporting step of executing a reporting operation according to the output control signal.

According to this method, it is possible to easily search for an object, communicate with a communication apparatus which manages the object and realize a more intimatecommunication with the other communication party considering also search conditions of the other communication party.

The present application is based on Japanese Patent Application No.2003-348040 filed on October 7, 2003, entire content of which is expressly incorporated by reference herein.

### Industrial Applicability

The present invention makes it easy to search for a desired object using a search support apparatus and communicate with a communication apparatus which manages the object.

## Claims

1. A search support apparatus comprising:
a search condition registration section that registers object search conditions;
a communication section that detects a communication apparatus which exists in a communication area and receives information about the object under the control of said communication apparatus;
a control section that compares the information about the object received from said communication section with the search conditions registered in said search condition registration section and outputs a control signal for controlling a reporting operation according to said comparison result; and
a reporting section that performs a reporting operation according to the control signal output from said control section.

2. A search support apparatus comprising:
a search condition registration section that registers object search conditions;
a communication section that detects a communication apparatus which exists in a communication area, receives information about the object under the control of said communication apparatus and transmits the search conditions registered in said search condition registration section to said communication apparatus;
a control section that compares the information about the object received from said communication section with the search conditions registered in said search condition registration section, transmits said comparison result to said communication apparatus through said communication section, receives the comparison result from said communication apparatus through said communication section and outputs a control signal for controlling a reporting operation according to both the transmitted and received comparison results; and
a reporting section that executes a reporting operation through the control signal output from said control section.

3. The search support apparatus according to cl,aim 1, wherein said control section measures a distance from said communication apparatus based on the reception intensity of the received signal by said communication section, generates and outputs said control signal according to said measured distance, and said reporting section changes the contents of the reporting operation according to the control signal output from said control section.

4. The search support apparatus according to claim 1, wherein said reporting section comprises a vibration control section and a vibration section and the vibration control section changes the intensity or the period of vibration of the vibration section according to the control signal output from said control section.

5. The search support apparatus according to claim 1, wherein said reporting section comprises a sound information storage section, a sound reproduction section, a volume control section and a sound generation section, and the sound reproduction section selects sound information stored in the sound information storage section according to the control signal output from said control section, outputs a reproduction sound signal and volume control signal to the volume control section and controls the amount of said reproduced sound generated.

6. The search support apparatus according to claim 1, wherein said reporting section comprises a blink period light-emitting intensity control section and a light-emitting section, and the blink period light-emitting intensity control section changes the blink period or the light-emitting intensity of the light-emitting section according to the control signal output from said control section.

7. The search support apparatus according to claim 1, wherein said reporting section comprises an image information storage section, an image reproduction section and a display section, and the image reproduction section selects image information stored in the image storage section according to the control signal output from said control section, outputs an image reproduction signal to the display section and displays a reproduced image.

8. The search support apparatus according to claim 1, wherein said reporting section comprises a smell information storage section, a smell reproduction section and a fragrance generation section, and the smell reproduction section selects the smell information stored in the smell information storage section according to the control signal output from said control section, outputs a smell reproduction signal to the fragrance generation section, generates fragrance in the fragrance generation section and changes the amount of said fragrance generated.

9. The search support apparatus according to claim 2, wherein said search condition registration section registers personal information about the user who uses the apparatus and object information such as characteristics and preferences of the person as search conditions of said object, and said control section comprises a confirmation section that confirms permission to transmit the personal information registered in said search condition registration section to said communication apparatus of when both the transmitted and received comparison results match and transmits said personal information to said communication apparatus through said communication section when the transmission is permitted.

10. The search support apparatus according to claim 9, further comprising an image-pickup section that performs image pickup in a plurality of image-pickup modes, wherein said control section comprises an image-pickup mode selection section that allows said user to select a desired image-pickup mode, sets the image-pickup mode of said image-pickup section in the selected image-pickup mode and registers the user's image captured in said search condition registration section as said personal information.

11. A search support method comprising: a search condition registration step of registering object search conditions; a communication step of detecting a communication apparatus which exists in a communication area and receiving information about the object under the control of said communication apparatus; a control step of comparing said received information about the object with said registered search conditions and controlling a reporting operation according to said comparison result; and a reporting step of executing a reporting operation according to said output control signal.

12. A search support method comprising: a search condition registration step of registering object search conditions; a communication step of detecting a communication apparatus which exists in a communication area, receiving information about the object under the control of said communication apparatus and transmitting the search conditions registered in said search condition registration section to said communication apparatus; a control step of comparing said received information about the object with said registered search conditions, transmitting said comparison result to said communication apparatus, receiving the comparison result from said communication apparatus and outputting a control signal for controlling a reporting operation according to both the transmitted and received comparison results; and a reporting step of executing a reporting operation according to said output control signal.

## Amended claims

### Amended claims under Art. 19.1 PCT

1. (Canceled)

2. (Amended) A search support apparatus comprising:
a search condition registration section that registers object search conditions;
a communication section that detects a communication apparatus which exists in a communication area, receives information about the object under the control of said communication apparatus and transmits the search conditions registered in said search condition registration section to said communication apparatus;
a control section that compares the information about the object received from said communication section with the search conditions registered in said search condition registration section, transmits said comparison result to said communication apparatus through said communication section, receives the comparison result from said communication apparatus through said communication section and outputs a control signal for controlling a reporting operation according to both the transmitted and received comparison results; and
a reporting section that executes a reporting operation through the control signal output from said control section, wherein said search condition registration section registers personal information about a user who uses the apparatus and object information such as characteristics and preferences of the person as said object search conditions, and
said control section comprises a confirmation section that confirms, when both said transmitted and received comparison results match, permission to transmit the personal information registered in said search condition registration section to said communication apparatus and transmits, when the transmission is permitted, said personal information to said communication apparatus through said communication section.

3. (Amended) The search support apparatus according to claim 2, wherein said control section measures a distance from said communication apparatus based on the reception intensity of the received signal by said communication section, generates and outputs said control signal according to said measured distance, and said reporting section changes the contents of the reporting operation according to the control signal output from said control section.

4. (Amended) The search support apparatus according to claim 2, wherein said reporting section comprises a vibration control section and a vibration section and the vibration control section changes the intensity or the period of vibration of the vibration section according to the control signal output from said control section.

5. (Amended) The search support apparatus according to claim 2, wherein said reporting section comprises a sound information storage section, a sound reproduction section, a volume control section and a sound generation section, and the sound reproduction section selects sound information stored in the sound information storage section according to the control signal output from said control section, outputs a reproduction sound signal and volume control signal to the volume control section and controls the amount of said reproduced sound generated.

6. (Amended) The search support apparatus according to claim 2, wherein said reporting section comprises a blink period light-emitting intensity control section and a light-emitting section, and the blink period light-emitting intensity control section changes the blink period or the light-emitting intensity of the light-emitting section according to the control signal output from said control section.

7. (Amended) The search support apparatus according to claim 2, wherein said reporting section comprises an image information storage section, an image reproduction section and a display section, and the image reproduction section selects image information stored in the image storage section according to the control signal output from said control section, outputs an image reproduction signal to the display section and displays a reproduced image.

8. (Amended) The search support apparatus according to claim 2, wherein said reporting section comprises a smell information storage section, a smell reproduction section and a fragrance generation section, and the smell reproduction section selects the smell information stored in the smell information storage section according to the control signal output from said control section, outputs a smell reproduction signal to the fragrance generation section; generates fragrance in the fragrance generation section and changes the amount of said fragrance generated.

9. (Canceled)

10. (Amended) The search support apparatus according to claim 2, further comprising an image-pickup section that performs image pickup in a plurality of image-pickup modes,
wherein said control section comprises an image-pickup mode selection section that allows said user to select a desired image-pickup mode, applies predetermined processing to the user's image captured in the selected image-pickup mode and transmits the image to said communication apparatus through said communication section.

11. (Canceled)

12. (Amended) A search support method comprising:
a search condition registration step of registering object search conditions;
a communication step of detecting a communication apparatus which exists in a communication area, receiving information about the object under the control of said communication apparatus and transmitting the search conditions registered in said search condition registration section to said communication apparatus;
a control step of comparing said received information about the object with said registered search conditions, transmitting said comparison result to said communicationapparatus, receiving the comparison result from said communication apparatus and outputting a control signal for controlling a reporting operation according to both the transmitted and received comparison results;
a reporting step of executing a reporting operation according to said output control signal;
a step of registering personal information about a user who uses the apparatus and object information such as characteristics and preferences of the person as said object search conditions;
a step of confirming, when both said transmitted and received comparison results match, permission to transmit the registered personal information to said communication apparatus; and
a step of transmitting, when the transmission is permitted, said personal information to said communication apparatus.
